(19) **Europäisches Patentamt / European Patent Office / Office européen des brevets**

(11) **EP 4 513 923 A1**

(12) **EUROPEAN PATENT APPLICATION**
published in accordance with Art. 153(4) EPC

(43) Date of publication:
26.02.2025 Bulletin 2025/09

(21) Application number: 23818958.3

(22) Date of filing: 26.05.2023

(51) International Patent Classification (IPC):
*H04W 12/033* (2021.01)

(52) Cooperative Patent Classification (CPC):
H04W 4/14; H04W 12/033; H04W 12/06

(86) International application number:
PCT/CN2023/096663

(87) International publication number:
WO 2023/236793 (14.12.2023 Gazette 2023/50)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 06.06.2022 CN 202210628785
30.08.2022 CN 202211049988

(71) Applicant: Huawei Technologies Co., Ltd.
Shenzhen, Guangdong 518129 (CN)

(72) Inventors:
• FENG, Jiashu
Shenzhen, Guangdong 518129 (CN)
• MENG, Fanrui
Shenzhen, Guangdong 518129 (CN)

(74) Representative: Epping - Hermann - Fischer
Patentanwaltsgesellschaft mbH
Schloßschmidstraße 5
80639 München (DE)

(54) **MESSAGE COMMUNICATION METHOD AND DEVICE**

(57) This application provides a message communication method and a device. In the method, an electronic device determines, in response to a first operation, a first message authentication code based on a message sending time corresponding to the first operation, plaintext content corresponding to the first operation, and a first key corresponding to the electronic device. The electronic device processes the first message authentication code based on a target authentication code length, to obtain a target authentication code. The electronic device generates a target message based on the target authentication code and encrypted plaintext content, and sends the target message to a server. According to the solution, after generating the first message authentication code, the electronic device may process the first message authentication code based on the target authentication code length, to obtain the target authentication code. The target authentication code may be used by the server to perform checking on the received message, and the target authentication code does not occupy excessive resources. Therefore, an amount of information that can be transmitted through message communication is increased when communication security is ensured.

FIG. 5

**Description**

**CROSS-REFERENCE TO RELATED APPLICATIONS**

This application claims priorities to Chinese Patent Application No. 202210628785.1, filed with the China National Intellectual Property Administration on June 6, 2022 and entitled "BEIDOU SHORT MESSAGE COMMUNICATION-BASED MESSAGE EXTENDED ENCRYPTION METHOD, APPARATUS, AND SYSTEM", and to Chinese Patent Application No. 202211049988.1, filed with the China National Intellectual Property Administration on August 30, 2022 and entitled "MESSAGE COMMUNICATION METHOD, AND DEVICE", both of which are incorporated herein by reference in their entireties.

**TECHNICAL FIELD**

This application relates to the field of communication technologies, and in particular, to a message communication method and a device.

**BACKGROUND**

Message communication is a communication manner in which a message is used as a basic transmission unit. A message transmitted between a sending end and a receiving end includes complete data information to be transmitted. A length of the message varies with a data volume transmitted by the message. When an air interface resource for the message communication is limited, a maximum length of the message is limited, and both an amount of information that can be transmitted by the message and security of the message communication are reduced.

For example, message communication that is based on a BeiDou navigation satellite system (BeiDou navigation satellite system, BDS) means bidirectional information transmission that can be performed between a BeiDou ground terminal, a BeiDou satellite, and a BeiDou ground monitoring station through satellite signals. A short message is usually used as a basic transmission unit in BeiDou satellite communication. BeiDou short message communication is a functional characteristic of the BDS.

The BeiDou short message communication may provide a communication service in areas (such as uninhabited areas, deserts, oceans, and polar regions) that cannot be covered by a common mobile communication signal or in scenarios (such as earthquake, flood, and typhoon) in which a communication base station is damaged. An electronic device in which a BeiDou short message module is installed may perform emergency communication by sending a BeiDou short message. The electronic device may be located through the BeiDou short message communication, so that a user learns of where the user is. In addition, information may be sent to the outside through the BeiDou short message communication, to tell others what happened. Therefore, the BeiDou short message communication plays a significant role in fields such as national defense, people's livelihood, and emergency rescue, and is widely used in scenarios such as outdoors, fishery, and disaster rescue.

However, because an air interface resource for the BeiDou short message is limited, a maximum message length reserved for an application layer message is limited. This imposes a limitation on application and promotion of the BeiDou short message communication.

**SUMMARY**

This application provides a message communication method and a device, to increase an amount of information that can be transmitted through message communication when security of message communication is ensured.

According to a first aspect, an embodiment of this application provides a message communication method. The method may be performed by an electronic device. The method includes: The electronic device determines, in response to a first operation, a first message authentication code based on a message sending time corresponding to the first operation, plaintext content corresponding to the first operation, and a first key corresponding to the electronic device. The electronic device processes the first message authentication code based on a target authentication code length, to obtain a target authentication code. The electronic device generates a target message based on the target authentication code and encrypted plaintext content, and sends the target message to a server.

In the foregoing method, after generating the first message authentication code, the electronic device may process the first message authentication code based on the target authentication code length, to obtain the target authentication code. The target authentication code may be used by the server to perform checking on the received message, and the target authentication code does not occupy excessive resources. Therefore, an amount of information that can be transmitted through message communication is increased when communication security is ensured.

Optionally, when the message communication method provided in this embodiment of this application is applied to satellite short message communication, the target message may be a satellite short message. That the electronic device sends the target message to the server may be that the electronic device sends the target message to the server by using a satellite. For example, the electronic device sends the target message to the satellite, the satellite forwards the target message to a satellite ground information processing center, and the satellite ground information processing center forwards the target message to the server.

In a possible design, before the processing the first message authentication code based on a target authentication code length, to obtain a target authentication code, the method further includes: determining, based on a service type of the target message and a preset relationship between a service type and an authentication code length, the target authentication code length corresponding to the service type of the target message.

According to the design, the electronic device may prestore the preset relationship between a service type and an authentication code length, and different service types may correspond to different authentication code lengths. In this way, when determining the target authentication code length, the electronic device may determine, based on the service type of the target message, the target authentication code length that is adapted to the target message. For example, when the service type of the target message has a high security requirement, the target authentication code length may be long, to ensure security of message communication. For another example, if the service type of the target message has a high requirement on an amount of information that can be transmitted, the target authentication code may be short, so that more plaintext content can be transmitted. A length of the message authentication code in the target message is flexibly set, so that requirements of various service types on security and an amount of information can be met.

Optionally, the service type of the target message may be a service type of plaintext content.

In a possible design, the generating a target message based on the target authentication code and encrypted plaintext content includes: determining, based on the service type of the target message and a preset relationship between a service type and a message sending manner, a message sending manner corresponding to the service type of the target message, where the message sending manner includes a single-frame packet manner and a multi-frame packet manner; and generating the target message based on the target authentication code and the encrypted plaintext content in the message sending manner corresponding to the service type of the target message. When the message sending manner corresponding to the service type of the target message is the single-frame packet manner, the target message includes one frame of packet. When the message sending manner corresponding to the service type of the target message is the multi-frame packet manner, the target message includes a plurality of frames of packets.

According to the design, the electronic device may prestore the preset relationship between a service type and a message sending manner, and the target message generated by the electronic device may include a single frame of packet and a plurality of frames of packets. This further increases the amount of information that can be transmitted through the message communication. In a possible design, when the message sending manner corresponding to the service type of the target message is the multi-frame packet manner, the generating the target message based on the target authentication code and the encrypted plaintext content in the message sending manner corresponding to the service type of the target message includes: segmenting the target authentication code to obtain M authentication sub-codes; segmenting the encrypted plaintext content to obtain M segments of sub-content; and generating the target message based on the M authentication sub-codes and the M segments of sub-content. The target message includes M frames of packets. An $i^{th}$ frame of packet in the M frames of packets includes an $i^{th}$ authentication sub-code in the M authentication sub-codes and an $i^{th}$ segment of sub-content in the M segments of sub-content. M is a positive integer greater than 1, and i is a positive integer less than or equal to M.

According to the design, when determining that the message sending manner corresponding to the service type of the target message is the multi-frame packet manner, the electronic device may segment an encrypted target authentication code and the encrypted plaintext content, and generate a plurality of frames of packets based on a sequence of the authentication sub-codes and the sub-content obtained after segmenting. This ensures reliability of sending the target message in the multi-frame packet manner.

In a possible design, the service type of the target message includes at least one of one-to-one chat text information, group chat text information, emergency information, and a red envelope. According to the design, messages of a plurality of service types may be transmitted in the message communication method provided in this application, thereby facilitating application and promotion of the message communication.

In a possible design, before the determining, in response to a first operation, a first message authentication code based on a message sending time corresponding to the first operation, plaintext content corresponding to the first operation, and a first key corresponding to the electronic device, the method further includes: sending authentication information to the server, where the authentication information is used by the server to authenticate the electronic device; and receiving the first key and a second key that are sent by the server. The first key is used by the electronic device to generate a message, and the second key is used by the electronic device to encrypt plaintext content.

According to the design, the electronic device may obtain the first key and the second key from the server, to ensure that a first key and a second key that are stored in the electronic device are the same as the first key and the second key that are corresponding to the electronic device and that are stored in the server. In this way, checking on the target message is implemented, and the security of message communication is improved.

In a possible design, the method further includes: periodically sending a key update request to the server based on a preset key update cycle, where the key update request is used to request the server to update the first key and the second key; and receiving and storing an updated first key and an updated second key that are sent by the server.

According to the design, the electronic device may periodically request the server to update the first key and the second key, to prevent a security risk caused by long-term use of a same key, thereby further ensuring the security of message communication.

Optionally, validity duration of the updated first key and the updated second key is preset duration, and the preset duration is greater than the key update cycle.

In a possible design, the plaintext content corresponding to the first operation includes at least one of location information, a text, a picture, audio, and a video.

According to the design, plaintext content in a plurality of forms may be transmitted in the message communication method provided in this application, so that the message communication can be widely applied.

According to a second aspect, this application provides a message communication method. The method may be applied to a server. The method includes: The server receives a target message sent by an electronic device. The server obtains plaintext content and a target authentication code from the target message. The server generates at least one second message authentication code based on a message receiving time of the target message, preset message transmission duration, the plaintext content, and a first key corresponding to the electronic device. The server determines, based on the target authentication code and the at least one second message authentication code, that checking on the target message succeeds, and performs a response action corresponding to the plaintext content.

In the foregoing method, the server may receive the target message sent by the electronic device, determine at least one second message authentication code based on the first key corresponding to the electronic device, the message receiving time, the preset message transmission duration, and the plaintext content, perform checking on the target message based on the at least one second message authentication code, and perform the response action corresponding to the plaintext content after the checking succeeds. This ensures security of message communication.

In a possible design, the obtaining plaintext content from the target message includes: obtaining encrypted plaintext content in the target message, and decrypting the encrypted plaintext content based on a second key corresponding to the electronic device, to obtain the plaintext content.

According to the design, the target message may include the encrypted plaintext content. After obtaining the encrypted plaintext content, the server may decrypt the encrypted plaintext content based on the second key corresponding to the electronic device, to obtain the plaintext content, thereby protecting user privacy and ensuring the security of message communication.

In a possible design, the target message includes N frames of packets, and the obtaining plaintext content and a target authentication code from the target message includes: obtaining N authentication sub-codes and N segments of sub-content from the N frames of packets; concatenating the N authentication sub-codes based on a message index and a packet index that are in each frame of packet, to obtain the target authentication code; and concatenating the N segments of sub-content based on the message index and the packet index in each frame of packet, and obtaining the plaintext content. The message index in each frame of packet indicates a message to which a packet pertains, and the packet index in each frame of packet indicates a location of the packet in the message to which the packet pertains.

According to the design, when the target message received by the server includes the N frames of packets, the server may concatenate the authentication sub-codes in the N frames of packets based on the message index and the packet index in each frame of packet, to obtain the target authentication code, concatenate the N segments of sub-content, and obtain the plaintext content. In this way, the target authentication code and the plaintext content can be restored, to ensure accuracy of message communication.

In a possible design, the generating at least one second message authentication code based on a message receiving time of the target message, preset message transmission duration, the plaintext content, and a first key corresponding to the electronic device includes: determining at least one predicted sending time based on the message receiving time of the target message, the preset message transmission duration, and a preset step value; and generating the at least one second message authentication code based on the at least one predicted sending time, the plaintext content, and the first key corresponding to the electronic device. The at least one predicted sending time is in a one-to-one correspondence with the at least one second message authentication code.

According to the design, the server may predict at least one predicted sending time based on the message receiving time and the preset message transmission duration, and generate one second message authentication code based on each predicted sending time. In this way, checking is performed on the target message, to ensure the security of message communication.

In a possible design, the determining, based on the target authentication code and the at least one second message authentication code, that checking on the target message succeeds includes: processing the at least one second message authentication code based on a target authentication code length, to obtain at least one third message authentication code, where the at least one third message authentication code is in a one-to-one correspondence with the at least one second message authentication code; and when any one of the at least one third message authentication code is consistent with the target authentication code, determining that the checking on the target message succeeds.

According to the design, when the server determines that any third message authentication code is consistent with the target authentication code, it indicates that a predicted sending time predicted by the server is accurate. In this case, the server determines that the checking on the target message succeeds.

In a possible design, the method further includes: receiving authentication information sent by the electronic device, and determining, based on the authentication information, that authentication on the electronic device succeeds; and generating the first key and the second key, and sending the first key and the second key to the electronic device. The first key is used by the electronic device to generate a message, and the second key is used by the electronic device to encrypt plaintext content.

According to the design, the electronic device may obtain the first key and the second key from the server, to ensure that a first key and a second key that are stored in the electronic device are the same as the first key and the second key that are corresponding to the electronic device and that are stored in the server. In this way, the checking on the target message is implemented, and the security of message communication is improved.

In a possible design, the method further includes: receiving a key update request sent by the electronic device, where the key update request is used to request the server to update the first key and the second key; and generating an updated first key and an updated second key, and sending the updated first key and the updated second key to the electronic device.

According to the design, the electronic device may periodically request the server to update the first key and the second key, to prevent a security risk caused by long-term use of a same key, thereby further ensuring the security of message communication.

In a possible design, the target message is a satellite short message. The receiving a target message sent by the electronic device includes: receiving the target message sent by the electronic device by using a satellite.

According to a third aspect, this application provides an electronic device. The electronic device includes a plurality of functional modules. The plurality of functional modules interact with each other, to implement the method performed by the electronic device in the first aspect and the implementations of the first aspect. The plurality of functional modules may be implemented based on software, hardware, or a combination of software and hardware, and the plurality of functional modules may be randomly combined or divided based on specific implementation.

According to a fourth aspect, this application provides an electronic device, including at least one processor and at least one memory. The at least one memory stores computer program instructions. When the electronic device runs, the at least one processor performs the method performed by the electronic device in the first aspect and the implementations of the first aspect.

According to a fifth aspect, this application provides a server. The server includes a plurality of functional modules. The plurality of functional modules interact with each other, to implement the method performed by the server in the second aspect and the implementations of the second aspect. The plurality of functional modules may be implemented based on software, hardware, or a combination of software and hardware, and the plurality of functional modules may be randomly combined or divided based on specific implementation.

According to a sixth aspect, this application provides a message communication system. The message communication system includes an electronic device and a server. The electronic device is configured to perform the method in the first aspect and the implementations of the first aspect. The server is configured to perform the method in the second aspect and the implementations of the second aspect.

According to a seventh aspect, this application provides a server, including at least one processor and at least one memory. The at least one memory stores computer program instructions. When the server runs, the at least one processor performs the method performed by the server in the second aspect and the implementations of the second aspect.

According to an eighth aspect, this application further provides a computer program product including instructions. When the computer program product runs on a computer, the computer is enabled to perform the method performed by the electronic device or the server in any one of the foregoing aspects and the implementations of the foregoing aspects.

According to a ninth aspect, this application further provides a computer-readable storage medium. The computer-readable storage medium stores a computer program. When the computer program is executed by a computer, the computer is enabled to perform the method performed by the electronic device or the server in any one of the foregoing aspects and the implementations of the foregoing aspects.

According to a tenth aspect, this application further provides a chip. The chip is configured to read a computer program stored in a memory, to perform the method performed by the electronic device or the server in any one of the foregoing aspects and the implementations of the foregoing aspects. According to an eleventh aspect, this application further provides a chip system. The chip system includes a processor, configured to support a computer apparatus in implementing the method performed by the electronic device or the server in any one of the foregoing aspects and the implementations of the foregoing aspects. In a possible design, the chip system further includes a memory, and the memory is configured to store a program and data that are necessary for the computer apparatus. The chip system may include a chip, or may include a chip and another discrete component.

## BRIEF DESCRIPTION OF DRAWINGS

FIG. 1 is a diagram of an architecture of a satellite short message communication system according to an embodiment of this application;

FIG. 2 is a diagram of a structure of an electronic device according to an embodiment of this application;

FIG. 3 is a block diagram of a software structure of an electronic device according to an embodiment of this application;

FIG. 4 is a flowchart of a satellite short message communication method according to an embodiment of this application; and

FIG. 5 is a flowchart of a message communication method according to an embodiment of this application.

## DESCRIPTION OF EMBODIMENTS

To make objectives, technical solution, and advantages of embodiments of this application clearer, the following further describes embodiments of this application in detail with reference to accompanying drawings. The terms "first" and "second" below in descriptions of embodiments of this application are only used for a description purpose, and shall not be understood as an indication or implication of relative importance or implicit indication of a quantity of indicated technical features. Therefore, a feature limited by "first" or "second" may explicitly or implicitly include one or more features.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following pieces (items)" or a similar expression thereof indicates any combination of these items, including a single item (piece) or any combination of a plurality of items (pieces). For example, at least one of a, b, or c may represent: a, b, c, a and b, a and c, b and c, or a, b and c, where a, b, and c may be a singular or plural number.

Message communication is a communication manner in which a message is used as a basic transmission unit. A message transmitted between a sending end and a receiving end includes complete data information to be transmitted. A length of the message varies with a data volume transmitted by the message. When an air interface resource for the message communication is limited, a maximum length of the message is limited, and both an amount of information that can be transmitted by the message and security of the message communication are reduced.

The following describes a message communication manner: BeiDou short message communication. A BeiDou navigation satellite system (beidou navigation satellite system, BDS) is an independently developed and operated global navigation satellite system that is being implemented by China. BDS-based short message communication based means bidirectional information transmission that can be performed between a BeiDou ground terminal, a BeiDou satellite, and a BeiDou ground information processing center through satellite signals. A short message is usually used as a basic transmission unit in BeiDou satellite communication. The BeiDou short message communication is a functional characteristic of the BDS. The BeiDou short message communication may provide a communication service in areas (such as uninhabited areas, deserts, oceans, and polar regions) that cannot be covered by a common mobile communication signal or in scenarios (such as earthquake, flood, and typhoon) in which a communication base station is damaged.

An electronic device in which a BDS module is installed may be used as the BeiDou ground terminal. The electronic device may perform emergency communication by sending a short message to the BeiDou satellite. The electronic device may be located through the BeiDou short message communication, so that a user learns of where the user is. In addition, information may be sent to the outside through the BeiDou short message communication, to tell others what happened. Therefore, the BeiDou short message communication plays a significant role in fields such as national defense, people's livelihood, and emergency rescue, and is widely used in scenarios such as outdoors, fishery, and disaster rescue.

However, because an air interface resource for a BeiDou short message is limited, a maximum message length reserved for an application layer message is limited. For example, a current maximum message length reserved for the application layer message is 400 bits. Under a limitation of the length, based on a common encryption scheme, content to be transmitted cannot be carried in a message, and identity authentication and reliable checking on authenticity and integrity of message data cannot be performed. This imposes a limitation on application and promotion of the BeiDou short message communication.

Based on the foregoing problem, embodiments of this application provide a message communication method and system, and a device. For ease of description, the following uses an example in which the message communication method provided in embodiments of this application is applied to satellite short message communication to describe the message communication method provided in embodiments of this application. It may be understood that in the satellite short message communication, an electronic device may send a short message to a server by using a satellite. When embodiments of this application are applied to another scenario, the electronic device may send a message to the server by using another relay communication device, or the electronic device may directly send a message to the server. This is not limited in embodiments of this application.

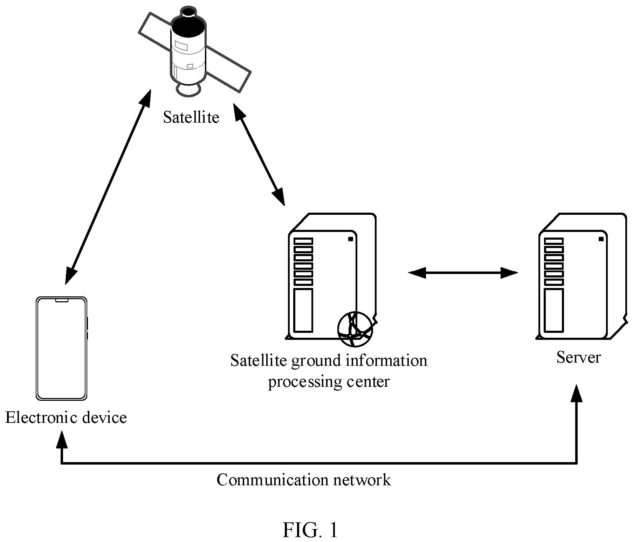

FIG. 1 is a diagram of an architecture of a satellite short message communication system according to an embodiment of this application. Refer to FIG. 1. The satellite short message communication system provided in this embodiment of this application includes an electronic device, a server, a satellite ground information processing center, and a satellite. The server may be a cloud server provided by an electronic device vendor. The satellite ground information processing center is a platform that is in the satellite communication system and that is configured to forward and process information received and sent by the satellite. The satellite ground information processing center may be implemented by one or more computing devices. In embodiments of this application, a BDS module is installed in the electronic device. When a communication network is available, the electronic device may communicate with the server through the communication network. When the communication network is unavailable, the electronic device may communicate with the satellite, and the satellite and the satellite ground information processing center may forward, to the server, a message sent by the electronic device, so that the electronic device communicates with the server by using the satellite.

In embodiments of this application, the satellite may be a BeiDou satellite, a satellite communication module installed in the electronic device may be the BDS module, and the satellite short message communication system may be a BeiDou short message communication system. It may be understood that the BeiDou satellite is only used as an example rather than a limitation. In specific implementation, the satellite short message communication charging method provided in embodiments of this application may be further applied to other satellite short message communication. This is not limited in this application.

In the message communication method provided in embodiments of this application, the electronic device determines a first message authentication code based on a message sending time, plaintext content, and a device-level authentication key corresponding to the electronic device, and processes the first message authentication code based on a target authentication code length, to obtain a target authentication code. The electronic device generates a target message based on the target authentication code and encrypted plaintext content. The electronic device sends the target message to the satellite. The satellite sends the target message to the satellite ground information processing center. The satellite ground information processing center sends the target message to the server. The server may obtain the plaintext content from the target message, and generate a second message authentication code based on the message sending time, the plaintext content, and the device-level authentication key corresponding to the electronic device. The server performs checking on the target message based on the target authentication code and the second message authentication code. The server determines that the checking on the target message succeeds, and performs a response action corresponding to the plaintext content.

According to a satellite short message communication method provided in embodiments of this application, after generating the first message authentication code, the electronic device may process the first message authentication code based on the target authentication code length, to obtain the target authentication code. The target authentication code may be used by the server to perform checking on the received message, and the target authentication code does not occupy excessive resources. Therefore, the electronic device may transmit various information by using a satellite short message when communication security is ensured.

The following describes the electronic device, and embodiments in which the electronic device is used. The electronic device in embodiments of this application may be an electronic device in which the BDS module is installed. The electronic device may be a tablet computer, a mobile phone, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a wearable device, or the like. A specific type of the electronic device is not limited in embodiments of this application.

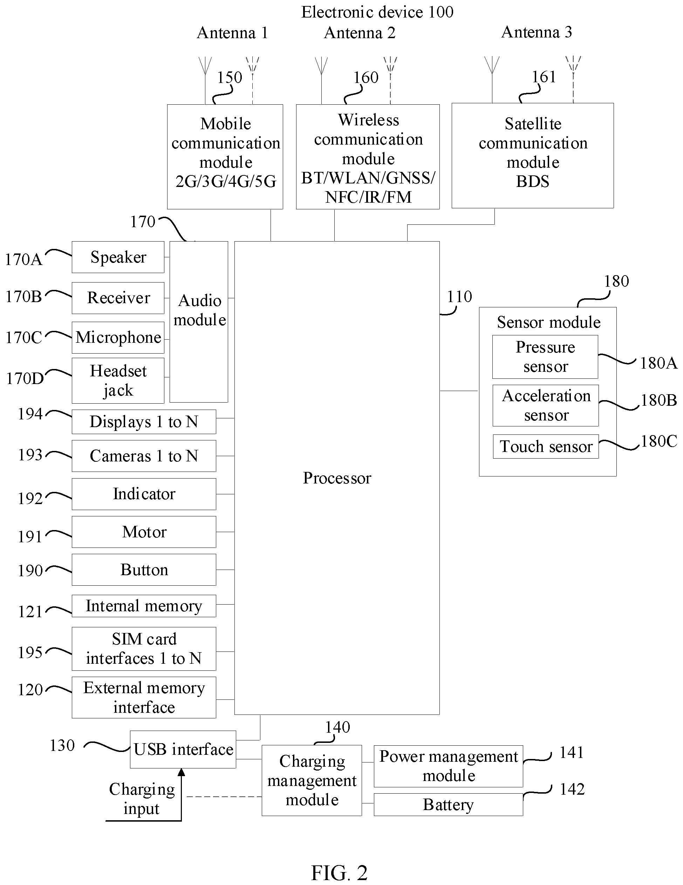

FIG. 2 is a diagram of a structure of an electronic device 100 according to an embodiment of this application. As shown in FIG. 2, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, an antenna 3, a mobile communication module 150, a wireless communication module 160, a satellite communication module 161, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on an instruction operation code and a time sequence signal, to complete control of instruction reading and instruction execution. A memory may be disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The USB interface 130 is an interface that conforms to the USB standard specification, and may be specifically a mini USB interface, a micro USB interface, a USB Type-C interface, or the like. The USB interface 130 may be configured to be connected to the charger to charge the electronic device 100, or may be configured to transmit data between the electronic device 100 and a peripheral device. The charging management module 140 is configured to receive a charging input from the charger. The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to receive and transmit an electromagnetic wave signal. Each antenna in the electronic device 100 may be configured to cover one or more communication frequency bands. Different antennas may be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the electronic device 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

The satellite communication module 161 may provide a satellite short message communication capability for the electronic device 100. The electronic device 100 may send a short message to a satellite by using the satellite communication module 161, and receive a short message sent by the satellite to the electronic device, to implement communication between the electronic device 100 and the satellite. For example, the satellite communication module 161 may be a BDS module.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite systems, QZSS), and/or a satellite based augmentation system (satellite based augmentation system, SBAS).

The display 194 is configured to display a display interface of an application, for example, display a display page of an application installed on the electronic device 100. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The camera 193 is configured to capture a still image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to a DSP for processing. The DSP converts the digital image signal into a standard image signal of a format such as RGB or YUV. In some embodiments, the electronic device 100 may include one or N cameras 193, where N is a positive integer greater than 1.

The internal memory 121 may be configured to store computer-executable program code, where the executable program code includes instructions. The processor 110 performs various function applications and data processing of the electronic device 100 by running the instructions stored in the internal memory 121. The internal memory 121 may include a program storage area and a data storage area. The program storage area may store an operating system, software code of at least one application, and the like. The data storage area may store data (for example, a captured image or a recorded video) and the like generated when the electronic device 100 is used. In addition, the internal memory 121 may include a high-speed random access memory, and may further include a nonvolatile memory, for example, at least one magnetic disk storage device, a flash storage device, and a universal flash storage (universal flash storage, UFS).

The external memory interface 120 may be configured to connect to an external memory card, such as a micro SD card, to extend a storage capability of the electronic device. The external memory card communicates with the processor 110 through the external memory interface 120, to implement a data storage function. For example, files such as pictures or videos are stored in the external memory card.

The electronic device 100 may implement an audio function such as music playing or recording by using the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal and may convert the pressure signal into an electrical signal. In some embodiments, the pressure sensor 180A may be disposed on the display 194.

The touch sensor 180C is also referred to as a "touch panel". The touch sensor 180C may be disposed on the display 194. The touch sensor 180C and the display 194 constitute a touchscreen, which is also referred to as a "touch screen". The touch sensor 180C is configured to detect a touch operation performed on or near the touch sensor 180C. The touch sensor may transfer the detected touch operation to the application processor to determine a type of the touch event. A visual output related to the touch operation may be provided on the display 194. In some other embodiments, the touch sensor 180C may alternatively be disposed on a surface of the electronic device 100, and is at a location different from that of the display 194.

The button 190 includes a power on/off button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effect. Touch vibration feedback effect may be customized. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to come into contact with and be separated from the electronic device 100.

It may be understood that the components shown in FIG. 2 do not constitute a specific limitation on the electronic device 100. The electronic device may further include more or fewer components than those shown in the figure, or some components may be combined or split, or there may be a different component arrangement. In addition, a combination/connection relationship between the components in FIG. 2 may also be adjusted and modified.

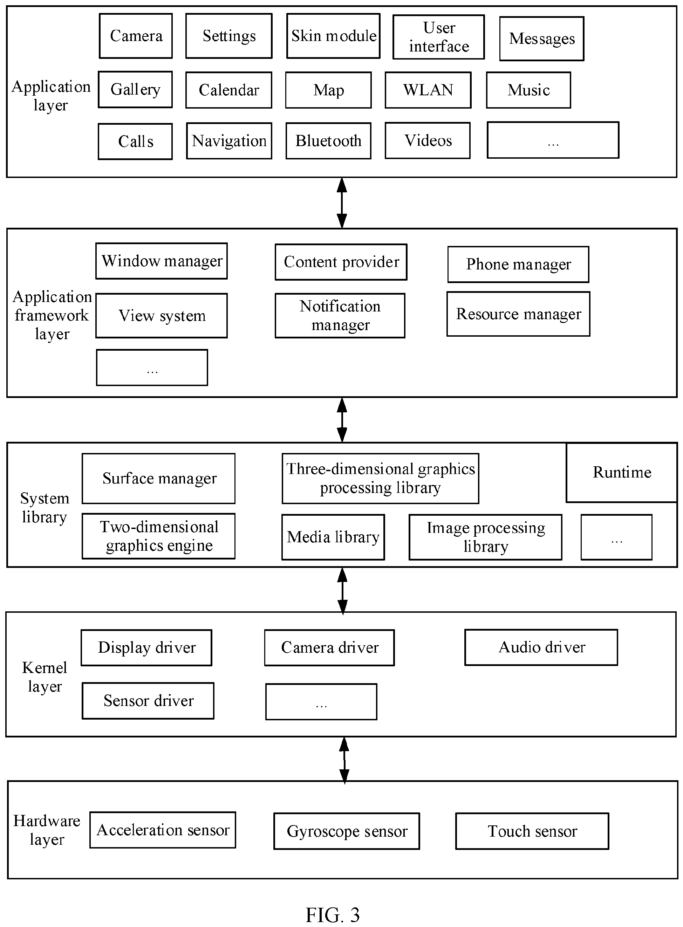

FIG. 3 is a block diagram of a software structure of an electronic device according to an embodiment of this application. As shown in FIG. 3, the software structure of the electronic device may be a layered architecture. For example, software may be divided into several layers, and each layer has a clear role and task. The layers communicate with each other through a software interface. In some embodiments, an operating system is divided into four layers: an application layer, an application framework (framework, FWK) layer, a runtime (runtime) and system library, and a kernel layer from top to bottom.

The application layer may include a series of application packages (application packages). As shown in FIG. 3, the application layer may include Camera, Settings, a skin module, a user interface (user interface, UI), a third-party application, and the like. Third-party applications may include Gallery, Calendar, Calls, Map, Navigation, WLAN, Bluetooth, Music, Videos, Messages, and the like. In embodiments of this application, the application layer may include a target installation package that is of a target application and that the electronic device requests to download from a server. A function file and a layout file in the target installation package are adapted to the electronic device.

The application framework layer provides an application programming interface (application programming interface, API) and a programming framework for an application in the application layer. The application framework layer may include some predefined functions. As shown in FIG. 3, the application framework layer may include a window manager, a content provider, a view system, a phone manager, a resource manager, and a notification manager.

The window manager is configured to manage a window program. The window manager may obtain a display size, determine whether there is a status bar, lock a screen, take a screenshot, and the like. The content provider is configured to store and obtain data, and enable these data to be accessible to an application. The data may include a video, an image, audio, calls that are made and received, a browsing history and a browsing bookmark, an address book, and the like.

The view system includes visual controls, such as a control for displaying text, a control for displaying pictures, and the like. The view system may be configured to build an application. A display interface may be formed by one or more views. For example, a display interface including an SMS message notification icon may include a view for displaying a text and a view for displaying a picture.

The phone manager is configured to provide a communication function of the electronic device, for example, management of a call status (including answering, declining, or the like).

The resource manager provides various resources for an application such as a localized character string, an icon, a picture, a layout file, and a video file.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively provide, on a status bar at the top of the system, a notification in a form of a chart or scroll bar text, for example, a notification of an application running in the background, or provide, on a screen, a notification in a form of a dialog window. For example, text information is displayed in the status bar, an announcement is given, the electronic device vibrates, or the indicator light blinks.

A runtime includes a core library and a virtual machine. The runtime schedules and manages an operating system.

The kernel library includes two parts: a function that needs to be called in a Java language, and a kernel library of the operating system. The application layer and the application framework layer run on the virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), a two-dimensional graphics engine (for example, SGL), and an image processing library.

The surface manager is used to manage a display subsystem and provide fusion of 2D and 3D layers for a plurality of applications.

The media library supports play and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

A hardware layer may include various sensors, for example, an acceleration sensor, a gyroscope sensor, and a touch sensor.

It should be noted that the structures shown in FIG. 2 and FIG. 3 are only used as examples of the electronic device provided in embodiments of this application, and cannot impose any limitation on the electronic device provided in embodiments of this application. In specific implementation, the electronic device may have more or fewer devices or modules than those in the structure shown in FIG. 2 or FIG. 3.

The following describes methods provided in embodiments of this application.

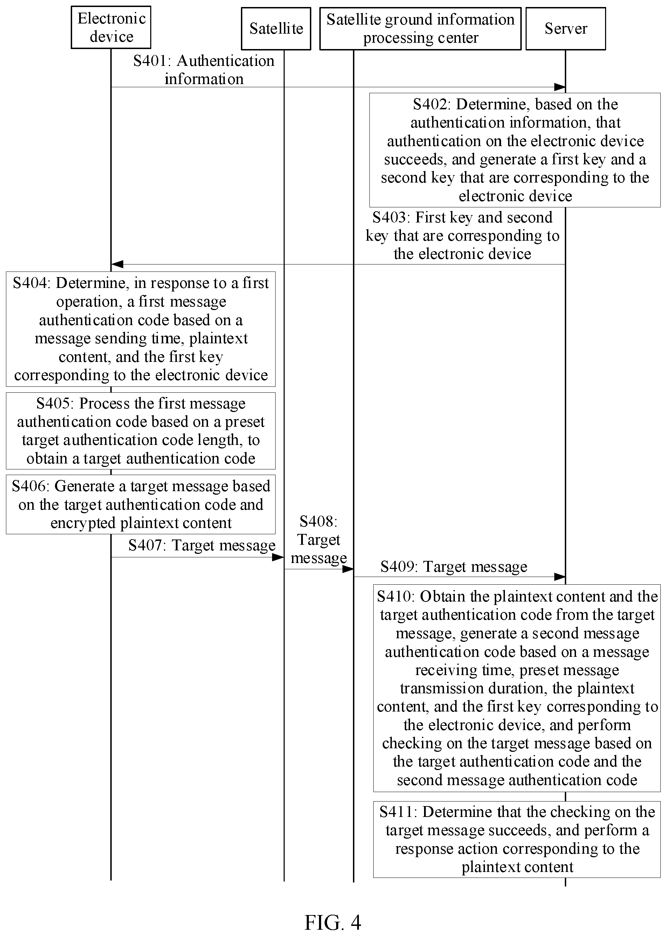

FIG. 4 is a flowchart of a satellite short message communication method according to an embodiment of this application. The method may be implemented by the electronic device, the server, the satellite ground information processing center, and the satellite in the satellite short message communication system shown in FIG. 1. Refer to FIG. 4. The method includes the following steps.

S401: The electronic device sends authentication information to the server in response to an operation that is triggered by a user and that is of enabling a satellite short message service.

In embodiments of this application, the satellite short message service may be a communication service provided for the user by the electronic device in which a satellite communication module is installed. The user may trigger, in a satellite communication application installed on the electronic device, the operation of enabling the satellite short message service, or the user may trigger, in a setting interface of the electronic device, the operation of enabling the satellite short message service. The electronic device may send the authentication information to the server in response to the operation that is triggered by the user and that is of enabling the satellite short message service. For example, the authentication information may be used to request the server to perform identity authentication on a user account, and may further be used to request the server to perform hyper text transfer protocol over securesocket layer (hyper text transfer protocol over securesocket layer, HTTPS) certificate authentication on the electronic device.

S402: The server determines, based on the authentication information, that authentication on the electronic device succeeds, and generates a first key and a second key that are corresponding to the electronic device.

Optionally, in embodiments of this application, the first key may be a device-level authentication key, and the second key may be a symmetric encryption key.

In an optional implementation, after receiving the authentication information sent by the electronic device, the server may perform the identity authentication on a logged-in user account of the electronic device, and may further perform the HTTPS certificate authentication.

After determining that the authentication on the electronic device succeeds, the server may generate, by using a secure random number, the device-level authentication key and the symmetric encryption key that are corresponding to the electronic device. The server may store the device-level authentication key and the symmetric encryption key that are corresponding to the electronic device.

S403: The server sends, to the electronic device, the first key and the second key that are corresponding to the electronic device.

Optionally, the server may send, to the electronic device by using an HTTPS channel, the device-level authentication key and the symmetric encryption key that are corresponding to the electronic device. The electronic device may store the device-level authentication key and the symmetric encryption key that are corresponding to the electronic device.

It should be noted that the electronic device may periodically request, based on a preset key update cycle, the server to update the device-level authentication key and the symmetric encryption key that are corresponding to the electronic device, to improve security. After the electronic device receives the device-level authentication key and the symmetric encryption key that are sent by the server, validity duration of the device-level authentication key and the symmetric encryption key may be preset duration, and the device-level authentication key and the symmetric encryption key become invalid after the preset duration. The preset duration is greater than the key update cycle.

For example, after the electronic device receives the device-level authentication key and the symmetric encryption key, the validity duration of the device-level authentication key and the symmetric encryption key is 28 days, and the preset key update cycle may be 7 days. That is, the electronic device requests the server to update the device-level authentication key and the symmetric encryption key every 7 days, an updated device-level authentication key and an updated symmetric encryption key overwrite the device-level authentication key and the symmetric encryption key that are previously stored in the electronic device, and validity duration of the updated device-level authentication key and the updated symmetric encryption key is 28 days. According to the implementation, when the first key and the second key cannot be updated in cases, for example, the electronic device is not powered on, it can be ensured that the electronic device stores the first key and the second key that can be used.

S404: The electronic device determines, in response to a first operation, a first message authentication code based on a message sending time, plaintext content, and the first key corresponding to the electronic device.

In a possible application scenario of this application, when the electronic device cannot be connected to a communication network, for example, a wireless local area network or a mobile communication network, the user may choose to enable a satellite short message communication function of the electronic device, so that the electronic device communicates with another electronic device in a satellite short message communication manner. Optionally, the first operation may be an operation that is triggered by the user and that is of sending a message. The satellite communication application may be installed on the electronic device, and the user may trigger the first operation by using the satellite communication application. Alternatively, after enabling the satellite short message communication function, the user may trigger the first operation in a third-party communication application. For example, the first operation may be an operation that is triggered by the user and that is of sending a current location, or may be an operation that is triggered by the user and that is of sending content input by the user.

In embodiments of this application, the electronic device may obtain, in response to the operation that is triggered by the user and that is of sending a message, plaintext content corresponding to the message. For example, the plaintext content may be a current location of the electronic device, message content input by the user, or the like. The message content input by the user may include a text, a picture, audio, a video, and the like. The electronic device may determine the first message authentication code based on the message sending time, the plaintext content, and the device-level authentication key corresponding to the electronic device. The message sending time may be a time at which the user triggers the first operation.

For example, the electronic device may determine, according to a hash-based message authentication code (hash-based message authentication code, HMAC) algorithm based on a secure hash algorithm (secure hash algorithm, SHA) 256, the first message authentication code based on the message sending time, the plaintext content, and the device-level authentication key corresponding to the electronic device. The message sending time may be universal time coordinated (universal time coordinated, UTC). The first message authentication code may satisfy the following formula 1:

$$\text{HMAC\_SHA256}(k, m) = \text{SHA256}\big(k' \oplus \text{opad}||\text{SHA256}(k' \oplus \text{ipad}||m)\big) \quad \text{Formula 1}$$

HMAC_SHA256(k, m) is the first message authentication code, k is the device-level authentication key, $k'$ is a key obtained through padding processing on the key K, m is the message sending time and the plaintext content, opad is 64 bytes of repeated 0x5C, ipad is 64 bytes of repeated 0x36, $\oplus$ indicates an exclusive OR operation, and $\|$ indicates a connection operation.

S405: The electronic device processes the first message authentication code based on a preset target authentication code length, to obtain a target authentication code.

Optionally, in embodiments of this application, a correspondence between a plurality of service types and a plurality of authentication code lengths may be preset. The electronic device may determine, based on a service type corresponding to the message, an authentication code length corresponding to the service type, and use the authentication code length corresponding to the service type as the target authentication code length. The electronic device processes the first message authentication code based on the target authentication code length, to obtain the target authentication code.

For example, an example in which a length of the first message authentication code is 256 bits, and the target authentication code length is 16 bits is used. When processing the first message authentication code based on the target authentication code length, the electronic device may take 16 most significant bits in the first message authentication code as the target authentication code, or take 16 least significant bits in the first message authentication code, or the electronic device may take bits in another manner, for example, reserve 16 bits in a preset sequence. This is not limited in embodiments of this application.

S406: The electronic device generates a target message based on the target authentication code and encrypted plaintext content.

Optionally, the electronic device may encrypt the plaintext content based on the symmetric encryption key, and then generate the target message based on the target authentication code and the encrypted plaintext content.

In embodiments of this application, the electronic device may determine, based on the service type of the message, to use a single-frame packet manner or a multi-frame packet manner. The single-frame packet manner is that the target message includes a single frame of packet. The single frame of packet may include the target authentication code and the encrypted plaintext content. The multi-frame packet manner is that the target message includes a plurality of frames of packets. The electronic device may process the target authentication code into a plurality of authentication sub-codes, and process the encrypted plaintext content into a plurality of segments of sub-content. Each of the plurality of frames of packets may include one authentication sub-code in the target authentication code and one segment of sub-content in the encrypted plaintext content. It should be noted that, in embodiments of this application, a service type of the target message may be a service type of the plaintext content. For example, if the service type of the plaintext content input by the user is one-to-one chat text information, the service type of the target message is the one-to-one chat text information.

The following separately describes a frame structure of the single frame of packet and a frame structure of the plurality of frames of packets that are provided in embodiments of this application.

1. Single frame of packet

When the electronic device sends a message in the single-frame packet manner, a single frame of packet may include a complete target authentication code and complete encrypted plaintext content. For example, Table 1 shows a frame structure of the single frame of packet provided in embodiments of this application. Table 1 uses an example in which the target authentication code length is 16 bits.

Table 1

| Frame header | | | | Application message header | Encrypted bitstream | |
|---|---|---|---|---|---|---|
| 1 bit | 3 bits | 2 bits | 2 bits | 8 bits | 16 bits | N bits |
| Acknowledgment indication | Service type | Encryption indication | Compression indication | Device identifier | Target authentication code | Encrypted plaintext content |
| N is a positive integer. | | | | | | |

Refer to Table 1. Content of 8 bits included in the frame header is a customized field of a satellite communication system. The device identifier is an identifier of the electronic device. The encrypted bitstream includes the target authentication code and the encrypted plaintext content.

2. Plurality of frames of packets

When sending a message in the multi-frame packet manner, the electronic device segments the target authentication code into M authentication sub-codes, segments the encrypted plaintext content into M segments of sub-content, and generates an $i^{th}$ frame of packet based on an $i^{th}$ authentication sub-code and an $i^{th}$ segment of sub-content. In this case, each frame of packet may include a packet index, and the packet index in each frame of packet may indicate a location of the frame of the packet in a message to which the frame of the packet pertains. In addition, a piece of plaintext content, sending of which is triggered by the user, may be large, and may be segmented into a plurality of messages, where each message may be sent in the multi-frame packet manner. In this case, each frame of packet may further include a message index, and the message index in each frame of packet indicates the message to which the frame of packet pertains. According to the design, sequence information of the plurality of frames of packets may be retained by using the message index and the packet index, to ensure that the server restores the plaintext content and the target authentication code based on a sequence of the plurality of frames of packets, thereby ensuring accuracy of message communication. For example, Table 2 shows a frame structure of the plurality of frames of packets provided in embodiments of this application.

Table 2

| 1 bit | 3 bits | 2 bits | 2 bits | N1 bits | 1 bit | N2 bits | N3 bits | N4 bits | N5 bits |
|---|---|---|---|---|---|---|---|---|---|
| Acknowledgment indication | Service type | Encryption indication | Compression indication | Device identifier | Framing indication | Message index | Packet index | Authentication sub-code | Sub-content |
| N1, N2, N3, N4, and N5 are positive integers. | | | | | | | | | |

Refer to Table 2. When the target message includes a plurality of frames of packets, each frame of packet may include the message index and the packet index, to indicate a specific ranking of the frame of packet in a message of a specific ranking. The authentication sub-code of N4 bits is one of a plurality of authentication sub-codes obtained by segmenting the target authentication code. The sub-content of N5 bits is one of a plurality segments of sub-content obtained by segmenting the encrypted plaintext content.

In an optional implementation, the electronic device may prestore a correspondence between a service type of a message and an authentication and encryption scheme. The authentication and encryption scheme includes the target authentication code length and a message sending manner. For example, Table 3 shows an example of the correspondence between the service type of the message and the authentication and encryption scheme provided in embodiments of this application. Refer to Table 3. The electronic device may determine the target authentication code length based on the service type of the message, and determine that the message sending manner is the single-frame packet manner or the multi-frame packet manner.

**Table 3**

| Service type | Feature | Authentication and encryption scheme |
|---|---|---|
| One-to-one chat text information | 1. Large message content<br>2. Small impact on security of a one-to-one chat | Target authentication code length: 16 bits<br>Single-frame packet manner |
| Group chat text information | 1. Large message content<br>2. Large impact on security of a group chat | Target authentication code length: 32 bits or 64 bits<br>Single-frame packet manner |
| Emergency information | 1. Fixed format of message content, and a small length<br>2. Relatively urgent, not applicable to the multi-frame packet manner<br>3. High security requirement | Target authentication code length: 256 bits<br><br>Single-frame packet manner |
| Red envelope and the like | 1. Fixed format of message content, and a large length<br>2. High security requirement | Target authentication code length: 256 bits<br><br>Multi-frame packet manner |

For example, it is assumed that an operation of triggering sending of a message by the user is that the user triggers sending of one-to-one chat text information, and after determining the first message authentication code based on the message sending time, the plaintext content, and the device-level authentication key corresponding to the electronic device, the electronic device determines, based on that a service type of the message is the one-to-one chat text information, that the authentication and encryption scheme is that the target authentication code length is 16 bits, and the message is sent in the single-frame packet manner. In this case, the electronic device truncates the first message authentication code based on the target authentication code length (16 bits), to obtain the target authentication code. The electronic device encrypts the one-to-one chat text information based on the symmetric encryption key, to obtain the encrypted plaintext content, and then generates the target message based on the target authentication code and the encrypted plaintext content.

For another example, it is assumed that an operation of triggering sending of a message by the user is that the user triggers sending of a red envelope, and after determining the first message authentication code based on the message sending time, the plaintext content, and the device-level authentication key corresponding to the electronic device, the electronic device determines, based on that a service type of the message is the red envelope, that the authentication and encryption scheme is that the target authentication code length is 256 bits, and the message is sent in the multi-frame packet manner. In this case, the electronic device uses the first message authentication code as the target authentication code. The electronic device encrypts, based on the symmetric encryption key, information corresponding to the red envelope, to obtain the encrypted plaintext content. The electronic device segments the target authentication code into M authentication sub-codes, and segments the encrypted plaintext content into M segments of sub-content. The electronic device generates the $i^{th}$ frame of packet based on the $i^{th}$ authentication sub-code and the $i^{th}$ segment of sub-content. The target message includes M frames of packets. M is a positive integer, and i is a positive integer less than or equal to M.

S407: The electronic device sends the target message to the satellite.

S408: The satellite sends the target message to the satellite ground information processing center. It should be noted that when the satellite and the satellite ground processing center forward the target message, it may be considered as transparent transmission.

S409: The satellite ground information processing center sends the target message to the server.

S410: The server obtains the plaintext content and the target authentication code from the target message, generates a second message authentication code based on a message receiving time, preset message transmission duration, the plaintext content, and the first key corresponding to the electronic device, and performs checking on the target message based on the target authentication code and the second message authentication code.

In an optional implementation, after receiving the target message sent by the satellite ground information processing center, the server may determine, based on the device identifier in the target message, the symmetric encryption key corresponding to the electronic device, obtain the plaintext content from the target message through decryption based on the symmetric encryption key, and obtain the target authentication code from the target message.

It should be noted that, if the target message includes a single frame of packet, the server may directly obtain the plaintext content and the target authentication code from the target message. If the target message includes a plurality of frames of packets, the server may concatenate, based on the message index and the packet index in each frame of packet, a plurality of authentication sub-codes obtained by the server from the plurality of frames of packets, to obtain the target authentication code, and concatenate, based on the message index and the packet index in each frame of packet, a plurality of segments of sub-content obtained by the server from the plurality of frames of packets, to obtain the plaintext content.

After obtaining the plaintext content and the target authentication code based on the target message, the server may determine, based on the device identifier in the target message, the device-level authentication key corresponding to the electronic device, and then generate the second message authentication code based on the message receiving time, the preset message transmission duration, the plaintext content, and the device-level authentication key corresponding to the electronic device.

In an optional implementation, the server may determine at least one predicted sending time based on the message receiving time at which the target message is received and the preset message transmission duration. For example, it is assumed that the message sending time and the message receiving time are counted at a minute level in embodiments of this application. After receiving the target message, the server may determine a plurality of predicted sending times based on the message receiving time, the preset message transmission duration, and a preset step value. For example, the message receiving time is 9:00, the preset message transmission duration is 2 minutes, and the preset step value is 1. In this case, the server may determine that the predicted sending times are 8:58 and 8:59. After determining the plurality of predicted sending times, the server may generate the second message authentication code based on each predicted sending time, the plaintext content, and the device-level authentication key corresponding to the electronic device. For a specific calculation manner, refer to the foregoing formula 1. Details are not described again. In other words, in embodiments of this application, the server may generate at least one second message authentication code based on at least one preset sending time.

It may be understood that, when the target message is a message sent by the electronic device, the first message authentication code generated before the electronic device sends the target message should be consistent with one of the at least one second message authentication code generated after the server receives the target message. In embodiments of this application, to reduce resources occupied by the authentication code in the target message, the electronic device may process the first message authentication code to obtain the target authentication code. Therefore, after receiving the target message, the server may perform the checking on the target message based on the target authentication code and the second message authentication code.

Optionally, the server may separately process each second message authentication code in a processing manner used by the electronic device, to obtain a plurality of third message authentication codes. If any third message authentication code is consistent with the target authentication code, the server may determine that the checking on the target message succeeds. According to the implementation, the server may complete identity authentication on the electronic device and integrity checking on the target message, to ensure security of satellite short message communication.

S411: The server determines that the checking on the target message succeeds, and performs a response action corresponding to the plaintext content.

In embodiments of this application, after determining that the checking on the target message succeeds, the server may perform the response action corresponding to the plaintext content. For example, when the plaintext content is the one-to-one chat text information, the server may send the one-to-one chat text information to a peer electronic device corresponding to the one-to-one chat text information.

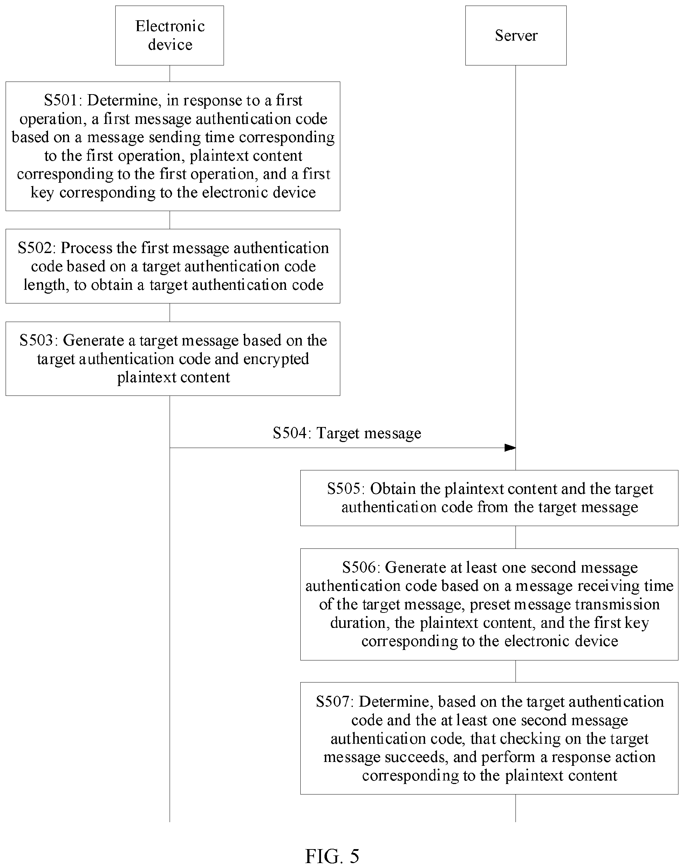

Based on the foregoing embodiments, this application further provides a message communication method. The method may be performed by an electronic device and a server. For example, the method may be applied to the electronic device and the server in the satellite short message communication system shown in FIG. 1. FIG. 5 is a flowchart of a message communication method according to an embodiment of this application. Refer to FIG. 5. The method includes the following steps.

S501: The electronic device determines, in response to a first operation, a first message authentication code based on a message sending time corresponding to the first operation, plaintext content corresponding to the first operation, and a first key corresponding to the electronic device. S502: The electronic device processes the first message authentication code based on a target authentication code length, to obtain a target authentication code.

S503: The electronic device generates a target message based on the target authentication code and encrypted plaintext content.

S504: The electronic device sends the target message to the server.

S505: The server obtains the plaintext content and the target authentication code from the target message.

S506: The server generates at least one second message authentication code based on a message receiving time of the target message, preset message transmission duration, the plaintext content, and the first key corresponding to the electronic device.

S507: The server determines, based on the target authentication code and the at least one second message authentication code, that checking on the target message succeeds, and performs a response action corresponding to the plaintext content.

It should be noted that, for specific implementation of the message communication method shown in FIG. 5 in this application, refer to the foregoing embodiments of this application. Details are not described again.

Based on the foregoing embodiments, this application further provides an electronic device. The electronic device includes a plurality of functional modules. The plurality of functional modules interact with each other, to implement functions performed by the electronic device in the methods described in embodiments of this application. For example, S401 and S404 to S407 that are performed by the electronic device in the embodiment shown in FIG. 4 are performed. For another example, S501 to S504 that are performed by the electronic device in the embodiment shown in FIG. 5 are performed. The plurality of functional modules may be implemented based on software, hardware, or a combination of software and hardware, and the plurality of functional modules may be randomly combined or divided based on specific implementation.

Based on the foregoing embodiments, this application further provides an electronic device. The electronic device includes at least one processor and at least one memory. The at least one memory stores computer program instructions. When the electronic device runs, the at least one processor performs functions performed by the electronic device in the methods described in embodiments of this application. For example, S401 and S404 to S407 that are performed by the electronic device in the embodiment shown in FIG. 4 are performed. For another example, S501 to S504 that are performed by the electronic device in the embodiment shown in FIG. 5 are performed.

Based on the foregoing embodiments, this application further provides a server. The server includes a plurality of functional modules. The plurality of functional modules interact with each other, to implement functions performed by the server in the methods described in embodiments of this application. For example, S402 and S403, and S410 and S411 that are performed by the server in the embodiment shown in FIG. 4 are performed. For another example, S505 to S507 that are performed by the server in the embodiment shown in FIG. 5 are performed. The plurality of functional modules may be implemented based on software, hardware, or a combination of software and hardware, and the plurality of functional modules may be randomly combined or divided based on specific implementation.

Based on the foregoing embodiments, this application further provides a server. The server includes at least one processor and at least one memory. The at least one memory stores computer program instructions. When the server runs, the at least one processor performs functions performed by the server in the methods described in embodiments of this application. For example, S402 and S403, and S410 and S411 that are performed by the server in the embodiment shown in FIG. 4 are performed. For another example, S505 to S507 that are performed by the server in the embodiment shown in FIG. 5 are performed.

Based on the foregoing embodiments, this application further provides a computer program product including instructions. When the computer program product runs on a computer, the computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or block diagrams of the methods, the devices (systems), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the claims of this application and their equivalent technologies.

**Claims**

1. A message communication method, wherein the method is applied to an electronic device and comprises:

   determining, in response to a first operation, a first message authentication code based on a message sending time corresponding to the first operation, plaintext content corresponding to the first operation, and a first key corresponding to the electronic device;

   processing the first message authentication code based on a target authentication code length, to obtain a target authentication code; and

   generating a target message based on the target authentication code and encrypted plaintext content, and sending the target message to a server.

2. The method according to claim 1, wherein before the processing the first message authentication code based on a target authentication code length, to obtain a target authentication code, the method further comprises:
   determining, based on a service type of the target message and a preset relationship between a service type and an authentication code length, the target authentication code length corresponding to the service type of the target message.

3. The method according to claim 1 or 2, wherein the generating a target message based on the target authentication code and encrypted plaintext content comprises:

   determining, based on the service type of the target message and a preset relationship between a service type and a message sending manner, a message sending manner corresponding to the service type of the target message, wherein the message sending manner comprises a single-frame packet manner and a multi-frame packet manner; and

   generating the target message based on the target authentication code and the encrypted plaintext content in the message sending manner corresponding to the service type of the target message, wherein when the message sending manner corresponding to the service type of the target message is the single-frame packet manner, the target message comprises one frame of packet; or when the message sending manner corresponding to the service type of the target message is the multi-frame packet manner, the target message comprises a plurality of frames of packets.

4. The method according to claim 3, wherein when the message sending manner corresponding to the service type of the target message is the multi-frame packet manner, the generating the target message based on the target authentication code and the encrypted plaintext content in the message sending manner corresponding to the service type of the target message comprises:

segmenting the target authentication code to obtain M authentication sub-codes;

segmenting the encrypted plaintext content to obtain M segments of sub-content; and

generating the target message based on the M authentication sub-codes and the M segments of sub-content, wherein the target message comprises M frames of packets, and an $i^{th}$ frame of packet in the M frames of packets comprises an $i^{th}$ authentication sub-code in the M authentication sub-codes and an $i^{th}$ segment of sub-content in the M segments of sub-content, wherein

M is a positive integer greater than 1, and i is a positive integer less than or equal to M.

5. The method according to any one of claims 2 to 4, wherein the service type of the target message comprises at least one of one-to-one chat text information, group chat text information, emergency information, and a red envelope.

6. The method according to any one of claims 1 to 5, wherein the plaintext content corresponding to the first operation comprises at least one of location information, a text, a picture, audio, and a video.

7. The method according to any one of claims 1 to 6, wherein the target message is a satellite short message, and the sending the target message to a server comprises:

sending the target message to the server by using a satellite.

8. A message communication method, wherein the method is applied to a server and comprises:

receiving a target message sent by an electronic device;

obtaining plaintext content and a target authentication code from the target message;

generating at least one second message authentication code based on a message receiving time of the target message, preset message transmission duration, the plaintext content, and a first key corresponding to the electronic device; and

determining, based on the target authentication code and the at least one second message authentication code, that checking on the target message succeeds, and performing a response action corresponding to the plaintext content.

9. The method according to claim 8, wherein the obtaining plaintext content from the target message comprises:

obtaining encrypted plaintext content in the target message, and decrypting the encrypted plaintext content based on a second key corresponding to the electronic device, to obtain the plaintext content.

10. The method according to claim 8 or 9, wherein the target message comprises N frames of packets, and the obtaining plaintext content and a target authentication code from the target message comprises:

obtaining N authentication sub-codes and N segments of sub-content from the N frames of packets;

concatenating the N authentication sub-codes based on a message index and a packet index that are in each frame of packet, to obtain the target authentication code; and

concatenating the N segments of sub-content based on the message index and the packet index in each frame of packet, and obtaining the plaintext content, wherein

the message index in each frame of packet indicates a message to which a packet pertains, and the packet index in each frame of packet indicates a location of the packet in the message to which the packet pertains.

11. The method according to any one of claims 8 to 10, wherein the generating a second message authentication code based on a message receiving time of the target message, preset message transmission duration, the plaintext content, and a first key corresponding to the electronic device comprises:

determining at least one predicted sending time based on the message receiving time of the target message, the preset message transmission duration, and a preset step value; and

generating the at least one second message authentication code based on the at least one predicted sending time, the plaintext content, and the first key corresponding to the electronic device, wherein the at least one predicted sending time is in a one-to-one correspondence with the at least one second message authentication code.

12. The method according to claim 11, wherein the determining, based on the target authentication code and the at least one second message authentication code, that checking on the target message succeeds comprises:

processing the at least one second message authentication code based on a target authentication code length, to obtain at least one third message authentication code, wherein the at least one third message authentication code is in a one-to-one correspondence with the at least one second message authentication code; and

when any one of the at least one third message authentication code is consistent with the target authentication code, determining that the checking on the target message succeeds.

13. The method according to any one of claims 9 to 12, wherein the method further comprises:

receiving authentication information sent by the electronic device, and determining, based on the authentication information, that authentication on the electronic device succeeds; and

generating the first key and the second key, and sending the first key and the second key to the electronic device, wherein

the first key is used by the electronic device to generate a message, and the second key is used by the electronic device to encrypt plaintext content.

14. The method according to claim 13, wherein the method further comprises:

receiving a key update request sent by the electronic device, wherein the key update request is used to request the server to update the first key and the second key; and

generating an updated first key and an updated second key, and sending the updated first key and the updated second key to the electronic device.

15. The method according to any one of claims 8 to 14, wherein the target message is a satellite short message, and the receiving a target message sent by an electronic device comprises:

receiving the target message sent by the electronic device by using a satellite.

16. An electronic device, comprising at least one processor, wherein the at least one processor is coupled to at least one memory, and the at least one processor is configured to read a computer program stored in the at least one memory, to perform the method according to any one of claims 1 to 7.

17. A server, comprising at least one processor, wherein the at least one processor is coupled to at least one memory, and the at least one processor is configured to read a computer program stored in the at least one memory, to perform the method according to any one of claims 8 to 15.

18. An electronic device, comprising a plurality of functional modules, wherein the plurality of functional modules interact with each other, to implement the method according to any one of claims 1 to 7.

19. A server, comprising a plurality of functional modules, wherein the plurality of functional modules interact with each other, to implement the method according to any one of claims 8 to 15.

20. A computer program product comprising instructions, wherein when the computer program product runs on a computer, the computer is enabled to perform the method according to any one of claims 1 to 7, or perform the method according to any one of claims 8 to 15.

21. A computer-readable storage medium, wherein the computer-readable storage medium stores instructions, and when the instructions are run on a computer, the computer is enabled to perform the method according to any one of claims 1 to 7, or perform the method according to any one of claims 8 to 15.

Satellite

Satellite ground information
processing center

Server

Electronic device

Communication network

FIG. 1

Electronic device 100

FIG. 2

| Application layer | Camera | Settings | Skin module | User interface | Messages |
| | Gallery | Calendar | Map | WLAN | Music |
| | Calls | Navigation | Bluetooth | Videos | ... |

| Application framework layer | Window manager | Content provider | Phone manager |
| | View system | Notification manager | Resource manager |
| | ... | | |

| System library | Surface manager | Three-dimensional graphics processing library | Runtime |
| | Two-dimensional graphics engine | Media library | Image processing library | ... |

| Kernel layer | Display driver | Camera driver | Audio driver |
| | Sensor driver | ... | |

| Hardware layer | Acceleration sensor | Gyroscope sensor | Touch sensor |

FIG. 3

| Electronic device | Satellite | Satellite ground information processing center | Server |
|---|---|---|---|

S401: Authentication information →

S402: Determine, based on the authentication information, that authentication on the electronic device succeeds, and generate a first key and a second key that are corresponding to the electronic device

S403: First key and second key that are corresponding to the electronic device

S404: Determine, in response to a first operation, a first message authentication code based on a message sending time, plaintext content, and the first key corresponding to the electronic device

S405: Process the first message authentication code based on a preset target authentication code length, to obtain a target authentication code

S406: Generate a target message based on the target authentication code and encrypted plaintext content

S407: Target message →

S408: Target message →

S409: Target message →

S410: Obtain the plaintext content and the target authentication code from the target message, generate a second message authentication code based on a message receiving time, preset message transmission duration, the plaintext content, and the first key corresponding to the electronic device, and perform checking on the target message based on the target authentication code and the second message authentication code

S411: Determine that the checking on the target message succeeds, and perform a response action corresponding to the plaintext content

FIG. 4

```
┌─────────────────┐                              ┌─────────────────┐
│   Electronic    │                              │                 │
│     device      │                              │     Server      │
└─────────────────┘                              └─────────────────┘
         │                                                 │
┌──────────────────────────────────────┐                  │
│ S501: Determine, in response to a first│                 │
│ operation, a first message authentication code│          │
│ based on a message sending time corresponding│           │
│ to the first operation, plaintext content      │         │
│ corresponding to the first operation, and a first│       │
│ key corresponding to the electronic device  │            │
└──────────────────────────────────────┘                  │
         │                                                 │
┌──────────────────────────────────────┐                  │
│ S502: Process the first message authentication│          │
│ code based on a target authentication code    │          │
│ length, to obtain a target authentication code│          │
└──────────────────────────────────────┘                  │
         │                                                 │
┌──────────────────────────────────────┐                  │
│ S503: Generate a target message based on the  │          │
│ target authentication code and encrypted      │          │
│ plaintext content                             │          │
└──────────────────────────────────────┘                  │
         │                                                 │
         │      S504: Target message                       │
         │────────────────────────────────────────────────▶│
         │                                                 │
         │         ┌──────────────────────────────────────┐
         │         │ S505: Obtain the plaintext content and the target│
         │         │ authentication code from the target message      │
         │         └──────────────────────────────────────┘
         │                                                 │
         │         ┌──────────────────────────────────────┐
         │         │ S506: Generate at least one second message      │
         │         │ authentication code based on a message receiving time│
         │         │ of the target message, preset message transmission│
         │         │ duration, the plaintext content, and the first key│
         │         │ corresponding to the electronic device          │
         │         └──────────────────────────────────────┘
         │                                                 │
         │         ┌──────────────────────────────────────┐
         │         │ S507: Determine, based on the target authentication│
         │         │ code and the at least one second message        │
         │         │ authentication code, that checking on the target │
         │         │ message succeeds, and perform a response action │
         │         │ corresponding to the plaintext content          │
         │         └──────────────────────────────────────┘
         │                                                 │
```

FIG. 5

**INTERNATIONAL SEARCH REPORT**

| International application No. |
| --- |
| **PCT/CN2023/096663** |

**A. CLASSIFICATION OF SUBJECT MATTER**

H04W 12/033(2021.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, DWPI, ENTXTC, WPABS, WPABSC, CNKI: 报文, 北斗, 不同, 长度, 处理, 短报文, 加密, 截断, 截取, 类型, 认证码, 认证码长度, 限制, 业务, 业务类型, packet, different, length, short packet, encryption, truncation, intercept, type, authentication code, restriction, traffic, service

**C. DOCUMENTS CONSIDERED TO BE RELEVANT**

| Category* | Citation of document, with indication, where appropriate, of the relevant passages | Relevant to claim No. |
| --- | --- | --- |
| X | CN 111669219 A (CHENGDU WESTONE INFORMATION INDUSTRY INC.) 15 September 2020 (2020-09-15) <br> description, paragraphs [0005]-[0168] | 8-15, 17, 19-21 |
| Y | CN 111669219 A (CHENGDU WESTONE INFORMATION INDUSTRY INC.) 15 September 2020 (2020-09-15) <br> description, paragraphs [0005]-[0168] | 1-7, 16, 18, 20, 21 |
| Y | CN 113455034 A (HUAWEI TECHNOLOGIES CO., LTD.) 28 September 2021 (2021-09-28) <br> description, paragraphs [0003]-[0124] | 1-7, 16, 18, 20, 21 |
| A | CN 108008420 A (BEIJING SATELLITE INFORMATION ENGINEERING INSTITUTE) 08 May 2018 (2018-05-08) <br> entire document | 1-21 |
| A | CN 109257737 A (BEIJING TIANHAIDA TECHNOLOGY CO., LTD.) 22 January 2019 (2019-01-22) <br> entire document | 1-21 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 August 2023** | **16 August 2023** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/096663** |

**C.    DOCUMENTS CONSIDERED TO BE RELEVANT**

| Category* | Citation of document, with indication, where appropriate, of the relevant passages | Relevant to claim No. |
|---|---|---|
| A | US 2020259661 A1 (SIEMENS AKTIENGESELLSHAFT) 13 August 2020 (2020-08-13) entire document | 1-21 |

Form PCT/ISA/210 (second sheet) (July 2022)

**INTERNATIONAL SEARCH REPORT**
**Information on patent family members**

International application No.

**PCT/CN2023/096663**

| Patent document cited in search report | | | Publication date (day/month/year) | Patent family member(s) | | | Publication date (day/month/year) |
|---|---|---|---|---|---|---|---|
| CN | 111669219 | A | 15 September 2020 | None | | | |
| CN | 113455034 | A | 28 September 2021 | None | | | |
| CN | 108008420 | A | 08 May 2018 | None | | | |
| CN | 109257737 | A | 22 January 2019 | None | | | |
| US | 2020259661 | A1 | 13 August 2020 | DE | 102016219926 | A1 | 19 April 2018 |
| | | | | RU | 2721759 | C1 | 22 May 2020 |
| | | | | US | 11288400 | B2 | 29 March 2022 |
| | | | | WO | 2018069271 | A1 | 19 April 2018 |
| | | | | EP | 3501136 | A1 | 26 June 2019 |
| | | | | JP | 2019535209 | A | 05 December 2019 |
| | | | | CN | 110089068 | A | 02 August 2019 |

Form PCT/ISA/210 (patent family annex) (July 2022)

**REFERENCES CITED IN THE DESCRIPTION**

**Patent documents cited in the description**

- CN 202210628785

- CN 202211049988